# EUROPÄISCHE PATENTSCHRIFT

(11) **EP 1 783 457 B1**
(45) Veröffentlichungstag und Bekanntmachung des Hinweises auf die Patenterteilung: **18.08.2010**
(21) Anmeldenummer: 06123157.7
(22) Anmeldetag: 30.10.2006
(51) Int. Cl.: G01C 21/36, G09B 29/10

(54) **Verfahren zum Darstellen grafischer Informationen sowie eine Vorrichtung zur Durchführung des Verfahrens**
Method for displaying graphical information and a device for carrying out the method
Procédé destiné à la représentation d'informations graphiques et dispositif destiné à l'exécution du procédé

(30) Priorität: 07.11.2005 DE 102005052878
(43) Veröffentlichungstag der Anmeldung: 09.05.2007
(73) Patentinhaber: ROBERT BOSCH GMBH, 70442 Stuttgart (DE)
(72) Erfinder: Smirnov, Lothar-Frank, 70567, Stuttgart (DE); Garrelts, Mathias, 31188, Holle (DE)

(56) Entgegenhaltungen:
- EP-A2- 0 897 169
- JP-A- 4 219 783
- JP-A- 10 288 529
- JP-A- 2002 005 670
- US-A1- 2005 024 238

## Beschreibung

Die Erfindung betrifft ein Verfahren zum Darstellen grafischer Informationen auf einem Display nach dem Oberbegriff von Anspruch 1.

Die Erfindung betrifft ferner eine Vorrichtung zur Durchführung eines solchen Verfahrens nach dem Oberbegriff von Anspruch 6.

Navigationssysteme sind bei Kraftfahrzeugen weit verbreitet. Neuere Fahrzeuge sind von den Herstellern oftmals bereits mit einem Navigationssystem ausgestattet. Ältere Fahrzeuge können mit einem Navigationssystem nachgerüstet werden, beispielsweise durch Geräte mit einem Personal Digital Assistent (PDA, Personal Digital Assistent), GPS-Empfänger und entsprechender Kartensoftware.

Moderne Navigationssysteme verfügen über ein Display, auf dem verschiedene grafische Informationen dargestellt werden können. Diese Informationen bestehen beispielsweise aus der Fahrzeugposition, einer Navigationsroute zwischen einem Startpunkt und einem Zielort, einem Kartenausschnitt mit Umgebungsinformationen sowie weiteren Informationen.

Diese modernen Navigationssysteme bieten oftmals als weitere Funktionalität das Karten-Verschieben an, so genanntes Karten-Scrolling. Beim Karten-Scrolling wird ein Objekt, nämlich der Cursor (z. B. Fadenkreuz), im Wesentlichen immer an der gleichen Stelle auf dem Display dargestellt. Verändern sich die geographischen Koordinaten des Fahrzeugs, so muss der Kartenausschnitt entgegengesetzt verschoben werden, damit das Fahrzeug seine Position auf dem Display beibehalten kann. Das Karten-Scrolling kann manuell oder automatisch erfolgen. Das automatische Karten-Scrolling findet beispielsweise während der Navigation des Fahrzeugs statt, wenn eine Ortungseinheit neue geographische Koordinaten des Fahrzeugs ermittelt und zur Aktualisierung der Darstellung auf dem Display an ein Grafiksystem übermittelt.

Das Karten-Scrolling ist mit einem erheblichen Rechenaufwand und einer großen Systemauslastung des Navigationssystems verbunden. Die Beanspruchung des Navigationssystems steigt mit zunehmender Scroll-Geschwindigkeit. Insbesondere beim manuellen Scrolling können hohe Scroll-Geschwindigkeiten erreicht werden, zum Beispiel wenn der Anwender des Navigationssystems das Fahrzeug innerhalb weniger Sekunden über einen Bereich von Süddeutschland bis Norddeutschland bewegt und das System eine große Anzahl an Kartenausschnitten berechnen, die zugehörigen Daten aus einer Datenbasis laden und auf dem Display darstellen muss. Um einen flüssigen Eindruck beim Anwender zu erzeugen, sind Bildwiederholungsfrequenzen von mindestens 12 fps (fps, frames per second) erforderlich.

Bei Systemen mit einer geringeren Leistungsfähigkeit kann es bei hohen Scroll-Geschwindigkeiten dazu führen, dass das Objekt nicht mehr an der vordefinierten Position auf dem Display dargestellt werden kann und an den Rand des Displays wandert. Die Wiedergabe auf dem Display entspricht dann nicht mehr der aktuellen Position des Objektes. Folglich ist dieser Fall zwangsläufig mit einem Informationsverlust für den Anwender verbunden.

In der US 2005/0090977 A1 ist ein Navigationsgerät beschrieben, bei dem eine digitale Karte auf einer Anzeigeeinheit dargestellt wird und verschoben werden kann. Dabei kann der Anzeigemaßstab des Kartenausschnitts verändert werden, um eine bessere Orientierung beim Karten-Scrollen zu ermöglichen.

In der US2005/024238 ist ein Navigationsgerät beschrieben, bei dem in einem ersten Modus eine digitale Karte auf einer Anzeigeeinheit dargestellt und verschoben wird, während ein Objekt (aktuelle Position eines Fahrzeuges) auf einer vordefinierten Position des Displays dargestellt wird. In einem zweiten Modus bleibt der dargestellte Kartenausschnitt unverändert, auch wenn sich die Position des Objektes auf dem Display ändert.

In dem zweiten Modus weist der Kartenausschnitt einen kleineren Maßstab auf als der Kartenausschnitt im ersten Modus. Das Wechseln zwischen den Modi wird manuell ausgelöst.

Aufgabe der Erfindung ist es daher, ein verbessertes Verfahren zur Darstellung grafischer Informationen auf einem Display bereitzustellen, bei dem insbesondere eine schnelle Veränderung der geographischen Position des Objektes ohne größeren Informationsverlust für den Anwender auf dem Display dargestellt werden kann. Ferner ist es Aufgabe der Erfindung, eine Vorrichtung zur Durchführung des erfindungsgemäßen Verfahrens bereitzustellen.

Die Aufgabe wird mit einem Verfahren nach Anspruch 1gelöst.

Das erfindungsgemäße Verfahren verfügt über einen zweiten Modus, bei dem ein Kartenausschnitt unverändert auf dem Display dargestellt wird, während sich die geographische Position des Objektes ändert. Da der Kartenausschnitt fest vorgegeben ist, wandert das Objekt entsprechend seiner aktuellen geographischen Position auf dem Display. In diesem zweiten Modus wird somit ein Karten-Scrolling mit der hohen Systembelastung durch das permanente Neuberechnen der Kartenausschnitte, Laden der zugehörigen Daten und Ausgeben auf dem Display vermieden. Da der Anwender der aktuellen Position des Objektes bei dessen schnellen Bewegen eine größere Aufmerksamkeit schenkt als detaillierten Informationen über die Umgebung, kommt es für den Anwender nur zu einem sehr geringen, untergeordneten Informationsverlust.

Die Bedingung zum Wechsel zwischen ersten und zweitem Modus hin und zurück, kann manuell oder automatisch ausgelöst werden. Manuell geschieht dies beispielsweise über eine Taste einer Eingabeeinrichtung. Beim automatischen Auslösen der Bedingung erkennt das Verfahren selbst, dass sich die Position des Objektes mit einer Geschwindigkeit geändert, bei der das Karten-Scrolling nicht mehr ohne Informationsverlust ausgeführt werden kann. In diesem Fall wird die erste Bedingung vorzugsweise durch ein Überschreiten einer vordefinierten Änderungsgeschwindigkeit der geographischen Position des Objektes ausgelöst.

In einer weiteren Ausführungsform wird beim Eintritt einer zweiten Bedingung von dem zweiten Modus in den ersten Modus gewechselt. Die zweite Bedingung kann manuell oder automatisch ausgelöst werden. Das manuelle Auslösen der zweiten Bedingung erfolgt beispielsweise über eine Taste an einer Eingabeeinrichtung. Beim automatischen Auslösen der zweiten Bedingung erkennt das Verfahren selbst, wenn sich die geographische Position des Objektes mit einer Geschwindigkeit ändert, bei der das Karten-Scrolling im ersten Modus mit einer für einen flüssigen Eindruck ausreichenden Bildwiederholungsfrequenz durchgeführt und gleichzeitig die aktuelle Position des Objektes wiedergegeben werden können.

Eine vorteilhafte Ausführungsform zeichnet sich dadurch aus, dass die geographischen Koordinaten des Objektes manuell verändert werden. Dadurch ist es für den Anwender möglich, sich unabhängig von einer Navigation mit dem Objekt auf der Karte zu bewegen und sich zu informieren.

Zweckmäßig ist erst, wenn die geographischen Koordinaten des Objektes durch eine Ortungseinheit bestimmt werden. Aufgrund der weltweiten Verfügbarkeit des GPS (GPS, Global Positioning System) bietet sich eine GPS-Satellitenortungseinheit an. Damit gibt das Objekt, z. B. ein Cursor, beispielsweise die aktuelle Ortsposition eines mit der Ortungseinheit ausgerüsteten Kraftfahrzeuges an.

Die Aufgabe wird ferner durch eine Vorrichtung nach Anspruch 6 gelöst.

Mit der erfindungsgemäßen Vorrichtung ist es möglich, dass sich das Objekt sehr schnell auf der Karte bewegen kann, ohne dass die Darstellung mit einem großen Informationsverlust für den Anwender verbunden ist. Bei einer schnellen Veränderung der geographischen Position des Objektes interessiert den Anwender in erster Linie die aktuelle Position des Objektes auf der Karte, weniger Detailinformationen der Umgebung des Objektes. Mit der erfindungsgemäßen Vorrichtung kann auch bei leistungsschwachen Systemen eine schnelle und aktuelle Wiedergabe der grafischen Informationen auf dem Display erfolgen. Dies führt zu einer größeren Akzeptanz der Anwender gegenüber leistungsschwächeren und günstigeren Systemen.

Die Erfindung wird in den folgenden Zeichnungen anhand einiger Ausführungsbeispiele näher erläutert. Es zeigen:
- Figur 1 -: drei Kartenausschnitte und
- Figur 2 -: den schematischen Aufbau einer erfindungsgemäßen Vorrichtung.

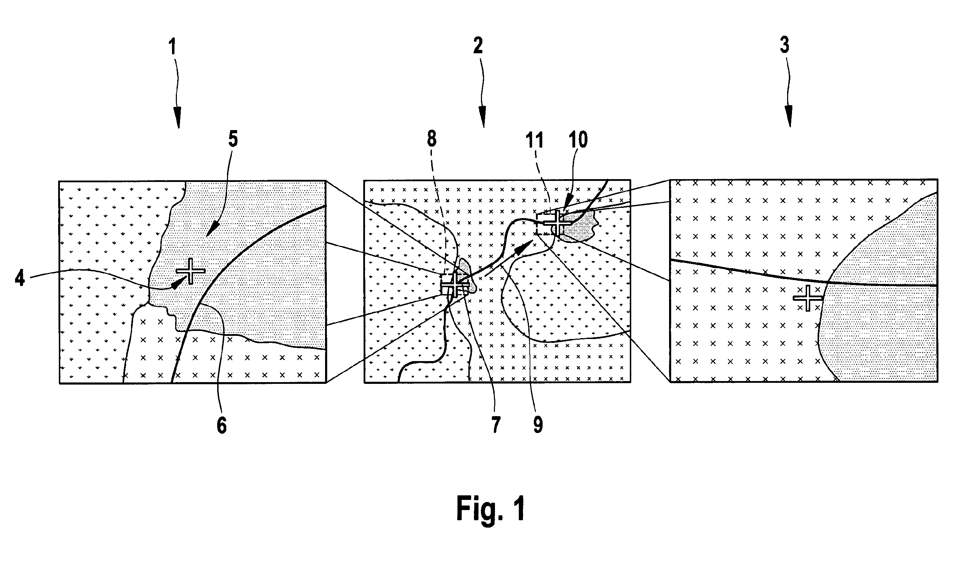

In der Figur 1 sind drei auf einem Display (nicht dargestellt) wiedergegebene Kartenausschnitte 1, 2, 3 dargestellt. Die Wiedergabe des Kartenausschnittes 1 erfolgt zu einem Zeitpunkt t₁, des Kartenausschnittes 2 zu einem Zeitpunkt t₂ und des Kartenausschnittes 3 zu einem Zeitpunkt t₃. Für die Zeitpunkte t₁, t₂, t₃ gilt: t₁<t₂<t₃. Für die Himmelsrichtungen gilt: oben=Nord, unten=Süd, links=West, rechts=Ost.

Bei der Wiedergabe des Kartenausschnitts 1 befindet sich das erfindungsgemäße Verfahren im ersten Modus.

Der Kartenausschnitt 1 zeigt ein Objekt 4 in Form eines Cursors, das durch ein Kreuz repräsentiert wird. Das Objekt 4 ist in der Mitte des Kartenausschnittes 1 angeordnet. Um das Objekt 4 herum erstreckt sich eine Umgebung 5. Durch die Umgebung 5 führt eine Straße, von der ein Abschnitt 6 zu sehen ist. Die geographische Position des Objektes 4 wird durch das Zentrum des Kreuzes auf dem Kartenausschnitt 1 abgebildet.

Der Anwender des Verfahrens kann die geographische Position des Objektes 4 manuell verändern. Dies erfolgt über ein haptisches Element, beispielsweise einen Joystick. Möglich ist aber auch die Verwendung eines Doppeldrehknopfes, bei dem zwei Drehknöpfe paraxial übereinander angeordnet sind; mit dem einen Drehknopf kann die geographische Position des Objektes 4 horizontal in West/Ost-Richtung, mit dem anderen Drehknopf vertikal in Nord/Süd-Richtung verschoben werden.

Verschiebt der Anwender das Objekt 4 in nördlicher Richtung, so verschiebt sich die Wiedergabe des Kartenausschnittes 1 in südliche Richtung, also auf dem Display nach unten. Auf diese Weise bleibt die geographische Position des Objektes 4 (Kreuz) fest in der Mitte des Displays angeordnet. Verschiebt der Anwender das Objekt 4 in südwestlicher Richtung, so wird der Kartenausschnitt 1 auf dem Display nach oben-rechts, also nord-östlich verschoben. Die nord-östliche Verschiebung setzt sich aus einer Überlagerung zweier translatorischer Verschiebungen, eine in horizontaler, die andere in vertikaler Richtung, zusammen. Dieses translatorische Verschieben des Kartenausschnittes 1 auf dem Display wird Karten-Scrollen genannt.

Der Maßstab des Kartenausschnittes 1 sei 1/A.

Wenn der Anwender das Objekt 4 im Folgenden mit einer zunehmenden Geschwindigkeit verschiebt, erkennt, das erfindungsgemäße Verfahren automatisch - dynamisch -, wenn die Änderungsgeschwindigkeit der geographischen Position des Objektes 4 einen vordefinierten Betrag erreicht. In diesem Moment wechselt das Verfahren automatisch von dem ersten in den zweiten Modus.

Nach dem Wechsel vom ersten in den zweiten Modus wird auf dem Display der Kartenausschnitt 2 mit einem Maßstab 1/B wiedergegeben.

Das Kreuz 7 zeigt die Position, an der sich das Objekt unmittelbar vor dem Wechsel von dem ersten in den zweiten Modus befand. Das kleine Rechteck 8 in dem Kartenausschnitt 2 entspricht dem Kartenausschnitt 1, der vor dem Wechsel auf dem Display dargestellt war. Der Kartenausschnitt 2 stellt eine vielfach größere Umgebung auf dem Display dar als der Kartenausschnitt 1. Folglich ist A << B.

In dem zweiten Modus wird der Kartenausschnitt 2 unverändert auf dem Display wiedergegeben. Bei einer Veränderung der geographischen Position des Objektes 4 wird das Kreuz 7, das das Objekt 4 auf dem Display repräsentiert, verschoben. Diese Verschiebung erfolgt bei gleicher Änderungsgeschwindigkeit der geographischen Position des Objektes 4 aufgrund des sehr viel kleineren Maßstabes deutlich langsamer als dies im ersten Modus für den Kartenausschnitt 1 der Fall wäre.

Der Anwender verschiebt das Objekt 4 nord-östlich in Richtung des Pfeils 9. Nachdem das Objekt 4 die Position 10 erreicht hat, stoppt der Anwender das Verschieben des Objektes 4. Die Änderungsgeschwindigkeit der geographischen Position des Objektes 4 wird dadurch reduziert und fällt unter einen vordefinierten Betrag. In diesem Moment wechselt das Verfahren automatisch von dem zweiten Modus in den ersten Modus zurück. Dabei stellt es den Kartenausschnitt 3 bei einem Maßstab 1/A dar. Der Kartenausschnitt 3 ist im Kartenausschnitt 2 als kleines Rechteck 11 dargestellt.

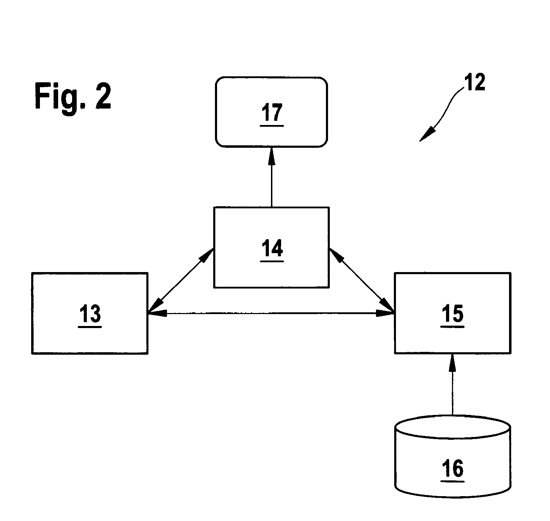

In Figur 2 ist eine erfindungsgemäße Vorrichtung 12 schematisch dargestellt, die beispielsweise ein Navigationsgerät für Kraftfahrzeuge sein kann.

Die Vorrichtung 12 umfasst ein HMI 13 (HMI, Human Machine Interface), ein Grafiksystem 14, eine Navigationseinheit 15, eine digitale Datenbasis 16 sowie ein Display 17.

Der Anwender kann über das HMI 13 Daten an die Navigationseinheit 15 übergeben. Zu diesen Daten gehören insbesondere der Startpunkt und der Zielort für die Navigation.

Der Anwender kann über das HMI 13 ferner Daten an das Grafiksystem 14 übergeben. Zu diesen Daten gehören insbesondere die geographischen Koordinaten eines Objektes, beispielsweise des Fahrzeugs. Es ist aber auch möglich, dass der Anwender einen Cursor auf dem Display 17 bewegt, der unabhängig von dem Fahrzeug ist. Auf diese Weise kann der Anwender die Vorrichtung unabhabhängig von einer Navigation verwenden, um sich über einzelne Umgebungen oder Strecken zu informieren.

Die Steuerung des Objektes auf dem Display 17 erfolgt über einen Joystick an dem HMI 13.

In der digitalen Datenbasis 16 ist eine Karte abgespeichert. Die digitale Datenbasis 16 umfasst neben Daten, die für eine Navigation erforderlich sind, weitere Informationen. Zu diesen gehören Umgebungsdaten sowie Daten zu nützlichen Einrichtungen, wie zum Beispiel Hotels und Tankstellen, d. h. sogenannte POIs (Point of Interest).

Die Navigationseinheit 15 ist als GPS-Navigationseinheit ausgestaltet. Hierzu ist sie mit einer GPS-Antenne (nicht dargestellt) zum Empfang der GPS-Satellitensignale und einer Ortungseinheit (nicht dargestellt) zur Decodierung der Satellitensignale und Berechnung der aktuellen Position des Fahrzeugs ausgestattet.

In dem Grafiksystem 14 wird das erfindungsgemäße Verfahren ausgeführt: im ersten Modus wird das Objekt ständig an einer bestimmten Position des Displays 17 dargestellt, während sich der Kartenausschnitt entsprechend translatorisch verschiebt. Das Grafiksystem 14 überwacht die Zeitpunkte, an denen ein neuer Kartenausschnitt darzustellen ist. Es führt die Berechnung des neuen Kartenausschnittes durch, lädt die zugehörigen Daten aus der digitalen Datenbasis 16 und gibt den neuen Kartenausschnitt auf dem Display 17 aus.

In Figur 2 erfolgt das Laden der Daten aus der digitalen Datenbasis 16 über die Navigationseinheit 16. Dies ist jedoch nicht zwingend. Es ist auch möglich, dass das Grafiksystem 14 die Daten direkt aus der digitalen Datenbasis 16 lädt. Zweckmäßig ist dies, wenn der Anwender das Grafiksystem 14 unabhängig von einer Navigation verwenden möchte.

## Patentansprüche

1. Verfahren zum Darstellen grafischer Informationen auf einem Display (17), bei dem in einem ersten Modus ein Objekt (4) mit variablen geografischen Koordinaten und ein erster Kartenausschnitt (1, 3) einer digitalen Karte, der die geografischen Koordinaten des Objektes (4) umfasst, auf dem Display (17) dargestellt werden, wobei die geografischen Koordinaten des Objektes (4) einer vordefinierten Position des Displays (17) zugeordnet werden, wenn die Darstellung auf dem Display (17) aktualisiert wird, wobei bei Eintritt einer ersten von der Positionsänderung des Objektes (4) relativ zum ersten Kartenausschnitt (1, 3) abhängigen Bedingung von dem ersten Modus in einen zweiten Modus gewechselt wird, bei dem das Objekt (4) und ein zweiter Kartenausschnitt (2) der digitalen Karte auf dem Display (17) dargestellt werden, der zweite Kartenausschnitt (2) die geografischen Koordinaten des Objektes (4) umfasst und einen kleineren Maßstab (1/B) aufweist als der erste Kartenausschnitt (1, 3), der zweite Kartenausschnitt (2) unverändert bleibt, wenn die Darstellung mindestens des Objektes (4) bei einer Positionsänderung auf dem Display (17) aktualisiert wird und bei Eintritt einer zweiten Bedingung von dem zweiten Modus in den ersten Modus gewechselt wird, **dadurch gekennzeichnet, dass** die zweite Bedingung durch ein Unterschreiten einer vordefinierten Änderungsgeschwindigkeit der geografischen Position des Objektes (4) ausgelöst wird, bei der das Karten-Scrolling im ersten Modus mit einer für einen flüssigen Eindruck ausreichenden Bildwiederholungsfrequenz durchgeführt und gleichzeitig die aktuelle Position des Objektes (4) wiedergegeben werden können.

2. Verfahren nach Anspruch 1, **dadurch gekennzeichnet, dass** die erste Bedingung manuell ausgelöst wird.

3. Verfahren nach Anspruch 1 oder 2, **dadurch gekennzeichnet, dass** die erste Bedingung durch ein Überschreiten einer vordefinierten Änderungsgeschwindigkeit der geografischen Position des Objektes (2) ausgelöst wird.

4. Verfahren nach einem der vorstehenden Ansprüche, **dadurch gekennzeichnet, dass** die geografischen Koordinaten des Objektes (4) manuell oder automatisch verändert werden.

5. Verfahren nach einem der vorstehenden Ansprüche, **dadurch gekennzeichnet, dass** die geografischen Koordinaten des Objektes (4) durch eine Ortungseinheit, insbesondere eine GPS-Ortungseinheit (GPS, Global Positioning System), verändert werden.

6. Vorrichtung zur Durchführung eines der Verfahren nach den Ansprüchen 1 bis 5 mit einem HMI (JMI, Human Machine Interface) (13) zur Eingabe von Anwenderdaten, einer digitalen Datenbasis (16) mit Daten einer Karte, einem Display (17) zur Darstellung grafischer Informationen und einem Grafiksystem (14) zur Aufbereitung der grafischen Informationen und Ansteuerung des Displays (17), wobei das Grafiksystem (14) ausgebildet ist,
in einem ersten Modus ein Objekt (4) mit variablen geografischen Koordinaten und einen ersten Kartenausschnitt (1, 3), der die geografischen Koordinaten des Objektes (4) umfasst, auf dem Display (17) darzustellen, wobei die geografischen Koordinaten des Objektes (4) einer vordefinierten Position des Displays (17) zugeordnet sind, wenn die Darstellung auf dem Display (17) aktualisiert wird,
in einem zweiten Modus das Objekt (4) und einen zweiten Kartenausschnitt (2) auf dem Display (17) darzustellen, wobei der zweite Kartenausschnitt (2) die geografischen Koordinaten des Objektes (4) umfasst und einen kleineren Maßstab (1/B) aufweist als der erste Kartenausschnitt (1, 3) und der zweite Kartenausschnitt (2) unverändert bleibt, wenn die Darstellung auf dem Display (17) aktualisiert wird,
einen Wechsel von dem ersten Modus in den zweiten Modus bei Eintritt einer ersten von der Positionsänderung des Objektes (4) relativ zum ersten Kartenausschnitt (1, 3) abhängigen Bedingung auszuführen, einen Wechsel von dem zweiten Modus in den ersten Modus bei Eintritt einer zweiten Bedingung auszuführen, **dadurch gekennzeichnet, dass** das Grafiksystem derart ausgebildet ist, dass die zweite Bedingung durch ein Unterschreiten einer vordefinierten Änderungsgeschwindigkeit der geografischen Position dies Objektes (4) ausgelöst wird, bei der das Karten-Scrolling im ersten Modus mit einer für einen flüssigen Eindruck ausreichenden Bildwiederholungsfrequenz durchgeführt und gleichzeitig die aktuelle Position des Objektes (4) wiedergegeben werden können.

## Claims

1. Method for presenting graphical information on a display (17), in which in a first mode an object (4) with variable geographical coordinates and a first map detail (1, 3) from a digital map, which map detail comprises the geographical coordinates of the object (4), are presented on the display (17), wherein the geographical coordinates of the object (4) are associated with a predefined position of the display (17) when the presentation on the display (17) is updated, wherein the occurrence of a first condition which is dependent on the change in position of the object (4) relative to the first map detail (1, 3) involves a change from the first mode to a second mode, in which the object (4) and a second map detail (2) from the digital map are presented on the display (17), the second map detail (2) comprises the geographical coordinates of the object (4) and has a smaller scale (1/B) than the first map detail (1, 3), the second map detail (2) remains unchanged when the presentation of at least the object (4) is updated in the event of a change in position on the display (17), and the occurrence of a second condition involves a change from the second mode to the first mode, **characterized in that** the second condition is triggered by a drop below a predefined speed of change in the geographical position of the object (4), for which speed the map scrolling in the first mode can be performed at a frame repetition rate sufficient for a fluid impression and at the same time the current position of the object (4) can be reproduced.

2. Method according to Claim 1, **characterized in that** the first condition is triggered manually.

3. Method according to Claim 1 or 2, **characterized in that** the first condition is triggered by a rise above a predefined speed of change in the geographical position of the object (2).

4. Method according to one of the preceding claims, **characterized in that** the geographical coordinates of the object (4) are altered manually or automatically.

5. Method according to one of the preceding claims, **characterized in that** the geographical coordinates of the object (4) are altered by a locating unit, particularly a GPS (Global Positioning System) locating unit.

6. Apparatus for performing one of the methods according to Claims 1 to 5 having an HMI (Human Machine Interface) (13) for the input of user data, a digital database (16) with data from a map, a display (17) for the presentation of graphical information and a graphics system (14) for the conditioning of the graphical information and actuation of the display (17), wherein the graphics system (14) is designed so that
in a first mode it presents an object (4) having variable geographical coordinates and a first map detail (1, 3), which comprises the geographical coordinates of the object (4), on the display (17), wherein the geographical coordinates of the object (4) are associated with a predefined position of the display (17) when the presentation on the display (17) is updated,
in a second mode it presents the object (4) and a second map detail (2) on the display (17), wherein the second map detail (2) comprises the geographical coordinates of the object (4) and has a smaller scale (1/B) than the first map detail (1, 3), and the second map detail (2) remains unchanged when the presentation on the display (17) is updated,
it executes a change from the first mode to the second mode upon the occurrence of a first condition which is dependent on the change in position of the object (4) relative to the first map detail (1, 3), and it executes a change from the second mode to the first mode upon the occurrence of a second condition, **characterized in that** the graphics system is designed such that the second condition is triggered by a drop below a predefined speed of change in the geographical position of the object (4), for which speed the map scrolling in the first mode can be performed at a frame repetition rate sufficient for a fluid impression and at the same time the current position of the object (4) can be reproduced.

## Revendications

1. Procédé de présentation d'informations graphiques sur un affichage (17), dans lequel
un objet (4) à coordonnées géographiques variables et une première partie (1, 3) d'une carte numérique qui comprend les coordonnées géographiques de l'objet (4) sont présentées sur l'affichage (17) dans un premier mode,
les coordonnées géographiques de l'objet (4) sont associées à une position prédéfinie de l'affichage (17) lorsque la présentation est actualisée sur l'affichage (17),
on passe du premier mode dans un deuxième mode dans lequel l'objet (4) et une deuxième partie (2) de la carte numérique sont présentés sur l'affichage (17) lorsqu'intervient une première condition qui dépend de la modification de position de l'objet (4) par rapport à la première partie de carte (1, 3),
la deuxième partie de carte (2) contient les coordonnées géographiques de l'objet (4) et a une échelle (1/B) plus petite que la première partie de carte (1, 3),
la deuxième partie de carte (2) reste inchangée lorsque la présentation d'au moins un objet (4) est actualisée sur l'affichage (17) lors d'une modification de position,
on passe du deuxième mode au premier mode lorsqu'intervient une deuxième condition,
**caractérisé en ce que**
la deuxième condition est déclenchée lorsqu'une vitesse prédéfinie de modification de la position géographique de l'objet (4) n'est pas atteinte,
**en ce que** le déroulement de la carte dans le premier mode est exécuté à une fréquence de répétition d'image suffisante pour donner une impression fluide et
**en ce que** la position actualisée de l'objet (4) peut en même temps être présentée.

2. Procédé selon la revendication 1, **caractérisé en ce que** la première condition est déclenchée manuellement.

3. Procédé selon les revendications 1 ou 2, **caractérisé en ce que** la première condition est déclenchée lorsque une vitesse prédéfinie de modification de la position géographique de l'objet (2) n'est pas atteinte.

4. Procédé selon l'une des revendications précédentes, **caractérisé en ce que** les coordonnées géographiques de l'objet (4) sont modifiées manuellement ou automatiquement.

5. Procédé selon l'une des revendications précédentes, **caractérisé en ce que** les coordonnées géographiques de l'objet (4) sont modifiées par une unité de localisation, en particulier une unité de localisation GPS (GPS "Global Positioning System" - système de positionnement global).

6. Dispositif en vue de l'exécution d'un des procédés selon l'une des revendications 1 à 5, présentant
une HMI (HIM - "Human Machine Interface" - interface homme-machine) (13) permettant d'introduire des données d'utilisation,
une base de données numériques (16) qui présente les données d'une carte,
un affichage (17) qui permet de présenter des informations graphiques et
un système graphique (14) qui prépare les informations graphiques et qui commande l'affichage (17),
le système graphique (14) étant configuré pour présenter sur l'affichage (17) dans un premier mode un objet (4) à coordonnées géographiques variables et une première partie de carte (1, 3) qui comprend les coordonnées géographiques de l'objet (4), les coordonnées géographiques de l'objet (4) étant associées à une position prédéfinie de l'affichage (17) lorsque la présentation sur l'affichage (17) est actualisée,
pour présenter dans un deuxième mode l'objet (4) et une deuxième partie de carte (2) sur un affichage (17), la deuxième partie de carte (2) comprenant les coordonnées géographiques de l'objet (4) et étant à une échelle (1/B) plus petite que la première partie de carte (1, 3), la deuxième partie de carte (2) restant inchangée lorsque la présentation est actualisée sur l'affichage (17),
pour exécuter un passage du premier mode dans le deuxième mode lorsqu'intervient une première condition qui dépend de la modification de position de l'objet (4) par rapport à la première partie de carte (1, 3) et
pour exécuter un passage du deuxième mode dans le premier mode lorsqu'intervient une deuxième condition, **caractérisé en ce que**
le système graphique est configuré de telle sorte que la deuxième condition est déclenchée lorsqu'une vitesse prédéfinie de modification de la position géographique de l'objet (4) n'est pas atteinte,
**en ce que** le déroulement de la carte en premier mode est exécuté avec une fréquence de répétition d'image qui suffit pour donner une impression de fluidité et
**en ce que** la position actualisée de l'objet (4) peut en même temps être présentée.
